# EUROPEAN PATENT SPECIFICATION

(11) **EP 3 972 044 B1**
(45) Date of publication and mention of the grant of the patent: **23.04.2025**
(21) Application number: 21194417.8
(22) Date of filing: 01.09.2021
(51) Int. Cl.: H01M 50/564

(54) **SECONDARY BATTERY AND TERMINAL FOR SECONDARY BATTERY AND MANUFACTURING METHOD THEREOF**
SEKUNDÄRBATTERIE UND ANSCHLUSSKLEMME FÜR SEKUNDÄRBATTERIE UND HERSTELLUNGSVERFAHREN DAFÜR
BATTERIE SECONDAIRE ET TERMINAL POUR BATTERIE SECONDAIRE ET SON PROCÉDÉ DE FABRICATION

(30) Priority: 17.09.2020 JP 2020155915
(43) Date of publication of application: 23.03.2022
(73) Proprietor: Prime Planet Energy & Solutions, Inc., Chuo-ku Tokyo 103-0022 (JP)
(72) Inventor: SUZUKI, Kosuke, Tokyo, 103-0022 (JP); SAKURAI, Takahiro, Tokyo, 103-0022 (JP); YONEDA, Koshiro, Tokyo, 103-0022 (JP)
(74) Representative: Kuhnen & Wacker Patent- und Rechtsanwaltsbüro PartG mbB

(56) References cited:
- JP-A- 2011 124 024
- JP-A- 2012 174 452
- JP-A- 2014 146 498
- JP-A- 2015 153 521
- JP-A- H09 219 204
- KR-A- 20160 107 938
- US-A1- 2013 224 536

## Description

### BACKGROUND

The present disclosure relates to a terminal to be used for an electrode terminal of a secondary battery, and a manufacturing method thereof.

A nonaqueous electrolyte secondary battery such as a lithium ion secondary battery is more lightweight and has a higher energy density as compared with existing batteries. For this reason, in recent years, the nonaqueous electrolyte secondary battery has been used as a power supply to be mounted on a vehicle that uses electricity as a driving source, or a power supply to be mounted on electric products such as a personal computer and a portable terminal. Particularly, an assembled battery including as a single cell a closed type lithium ion secondary battery, which is lightweight and provides a high energy density, has been preferably used as a high output power supply for driving a vehicle such as an electric vehicle (EV), a plug-in hybrid vehicle (PHV), or a hybrid vehicle (HV).

Such a closed type secondary battery forming an assembled battery includes a battery case for accommodating an electrode body, and electrode terminals of a positive electrode and a negative electrode. One end of the electrode terminal forming the secondary battery is exposed to the outside of the battery case, and the other end is connected with the electrode body inside the battery case via a collector.

A plurality of such secondary batteries (which will be hereinafter also referred to as "single cells") are arrayed along a prescribed array direction, and the electrode terminal of one single cell is electrically connected with another single cell via a bus bar, thereby constructing an assembled battery.

Generally, the electrode terminals of the positive electrode and the negative electrode of this type of secondary battery are formed of different metal materials, respectively. When a bus bar formed of the same kind of material as that for one of the electrode terminals is used for connection between single cells, the conduction and the junction strength between the other of the electrode terminals and the bus bar become relatively lower as compared with those for the one of the electrode terminals.

In order to ensure the conduction and the junction strength between the electrode terminal and the bus bar, Japanese Patent Application JP 2016-18675 A and Japanese Patent Application JP 2011-124024 A disclose a technology of joining an intermediate member formed of the same kind of material as that for the bus bar to an electrode terminal formed of a different kind of material from that for the bus bar by ultrasonic joining. A method for producing battery packs is furthermore known from Japanese Patent Application JP H09-219204 A. A secondary battery terminal including a lid to block an opening part of a vessel for accommodating an electrode body, an internal terminal joined to the electrode body, an external tie bolt having a polygonal head contacting to an external side face of the internal terminal, and an external contact terminal having an annular shape to insert the head into the inner peripheral side and being inserted into an arrangement hole formed on the lid, through an outer insulation material, is known from JP 2014-146498 A. In the secondary battery terminal of JP 2014-146498 A, an outer rim portion on the tip side of the external contact terminal of the secondary battery terminal is crimped to the periphery of the arrangement hole on the lid through the outer insulation material, in a state that the polygonal head is prevented from rotation by an inner peripheral face of the external contact terminal.

### SUMMARY

However, when an electrode terminal and an intermediate member are subjected to ultrasonic joining, in order to ensure the junction strength between the electrode terminal and the intermediate member, a large junction energy is required to be applied to the junction surface. When the junction surface is applied with a large junction energy, roughness or deformation is caused at the surface of the intermediate member, namely, the connection surface between the intermediate member and the bus bar. This requires a post treatment for flattening the surface. In Japanese Patent Application Publication No. 2016-18675, after ultrasonic joining, a treatment for reducing the surface roughness by the surface treatment such as a cutting treatment, a polishing treatment, or a melting treatment is performed. In Japanese Patent Application JP 2011-124024 A, a step of removing foreign matters generated accordingly after ultrasonic joining is provided.

Such steps cause hindrance in easy assembly of a battery and further in the production of a battery. There has been a demand for the development of a technology so as to establish a favorable conduction between an electrode terminal and an external connection terminal such as a bus bar, and to ensure the junction strength between the members, and moreover to eliminate the necessity of a complicated post treatment.

The present disclosure has been made in view of such points. It is a main object of the present disclosure to provide a terminal excellent in conduction with an external connection terminal such as a bus bar. In addition, it is another main object to provide a battery using such a terminal, and a technology of manufacturing the terminal without requiring a post treatment.

The present inventors focused on the following: two members each made of a metal and forming a terminal are crimped to each other, which can strengthen the mechanical strength between the members. Further, the present inventors found the following: by elaborating the form of the crimped structure, it is possible to apply metal-joining between the two members without further affecting the crimped structure, and as a result, it is possible to attain both the junction strength and the conduction with more ease than ever. As a result, the present inventors completed the present disclosure, with the invention given by the claims.

The terminal herein disclosed is a terminal forming any of a positive electrode and a negative electrode of a secondary battery, and has a first member and a second member each made of a metal, wherein the first member and the second member are formed of mutually different metals. The first member is formed in a sheet shape and has a concave part, and the second member has a crimped part and a shaft part. Herein, the crimped part of the second member is provided in a convex shape or a flange shape at a surface of the shaft part opposed to the first member, fitted into the concave part of the first member and crimped with the first member at one surface of the first member not via a through hole, and the first member and the second member have metal junction surfaces metal-joined to each other at opposing surfaces thereof after the first member and the second member have been previously crimped, wherein the metal joining is performed by ultrasonic joining, diffusion joining, frictional pressure contact, or laser welding.

With normal crimping, a part of one member passes through a through hole previously formed in the other member, and the part of the passed one member is crimped at the periphery of the through hole of the other member. As a result, a crimped structure is formed. However, for such a crimped structure via the through hole, the formation of the through hole causes the crimped structure itself to occupy a large area. For this reason, it is difficult to ensure the region suitable for separately performing metal joining.

On the other hand, for the terminal for a secondary battery herein disclosed, the first member and the second member are crimped with each other not via a through hole, thereby ensuring the mechanical strength of the terminal. This can ensure the region for forming metal-joining at mutually opposing surfaces of the first member and the second member after crimping. Further, the first member and the second member are crimped with each other not via a through hole. For this reason, it is possible to suppress the change in shape due to the crimped structure at the surface of the first member on an opposite side thereof to the second member.

Further, for the terminal herein disclosed, the mechanical strength is ensured by the crimped structure not via a through hole, and metal junction surfaces metal joined to each other are formed at the opposing surfaces of the first member and the second member. As a result, a favorable conduction between the first member and the second member is ensured. Moreover, with the technology herein disclosed, both the crimped structure not via a through hole and metal joining are attained. Even when the first member and the second member are formed of mutually different metals, favorable mechanical strength and conduction are implemented.

In a preferable embodiment, the area of the metal junction surface is 10% or less of an area of each opposing surface of the first member and the second member.

With such a configuration, it is possible to reduce the effects exerted by metal joining on the surface of the first member. As a result, it is possible to keep the initial flatness of the surface of the sheet-shaped first member on an opposite side to the surface, which is opposed to the second member (i.e., the surface of the first member which can be connected with an external connection component).

In a more preferable embodiment, the first member has a concave part at a surface thereof on an opposite side to a surface is opposed to the second member, and the metal junction surface is formed at a part opposed to the concave part.

With such a configuration, it is possible to keep the flatness of the part except for the concave part at the surface of the sheet-shaped first member on an opposite side to the surface opposed to the second member.

In another preferable embodiment, an arithmetic average roughness Sa at a surface of the first member on an opposite side to the opposing surface is 5 µm or less.

With such a configuration, it is possible to keep the initial flatness of the surface of the sheet-shaped first member on an opposite side to the surface, which is opposed to the second member (i.e., the surface of the first member which can be connected with an external connection component).

### {cancelled}

For example, mention may be made of the case where the first member is formed of aluminum or an alloy mainly containing aluminum, and the second member is formed of copper or an alloy mainly containing copper.

In one embodiment, the metal junction surfaces present between the first member and the second member have junction surfaces caused by ultrasonic joining.

With such a configuration, the first member and the second member can be brought into conduction with each other more favorably.

As another aspect of the technology herein disclosed, a secondary battery is provided which includes: an electrode body including a positive electrode and a negative electrode; a battery case accommodating therein the electrode body; and a positive electrode terminal and a negative electrode terminal electrically connected with the positive electrode and the negative electrode in the electrode body, respectively, in which at least one of the positive electrode terminal and the negative electrode terminal includes the terminal herein disclosed.

As a still other aspect of the technology herein disclosed, an assembled battery is provided which includes a plurality of single cells electrically connected to one another and arrayed therein, in which the secondary battery including the terminal herein disclosed as at least one of the positive electrode terminal and the negative electrode terminal is used as each of the plurality of single cells.

As a still other preferable embodiment, for the respective plurality of single cells, a positive electrode terminal of one single cell and a negative electrode terminal of another single cell are electrically connected with each other by a prescribed bus bar, and the bus bar is formed of the same metal as a metal forming the first member of the terminal.

With such a configuration, an assemble battery is provided in which a favorable connection is established between the single cells.

As a still other aspect of the technology herein disclosed, a method for manufacturing a terminal is provided.

Namely, the method for manufacturing a terminal herein disclosed includes the following steps of:
preparing a first member and a second member each made of a metal and forming the terminal, with the first member and the second member being formed of mutually different metals, the first member being formed in a sheet shape and having a concave part, and the second member having a crimped part and a shaft part, wherein the crimped part of the second member is provided in a convex shape or a flange shape at a surface of the shaft part opposed to the first member;
crimping the crimped part of the second member, after fitting the crimped part into the concave part of the first member, to the first member not via a through hole at one surface of the first member; and
metal-joining, after crimping the crimped part of the second member to the first member, at least a part of opposing surfaces of the first member and the second member to each other by ultrasonic joining, diffusion joining, frictional pressure contact, or laser welding.

With such a manufacturing method, it is possible to manufacture a terminal including the terminal herein disclosed as a constituent element.

In a preferable embodiment, the step of metal joining is carried out so that a junction surface of metal joining formed by the step may have an area of 10% or less of an area of each opposing surface of the first member and the second member.

With such a manufacturing method, it is possible to reduce the effects exerted by metal joining on the first member surface. As a result, it is possible to manufacture a terminal kept in flatness of the surface of the first member to be connected with an external connection component.

In a preferable embodiment, the step of metal joining is carried out so that an arithmetic average roughness Sa at a surface opposite to the opposing surface of the first member after the metal joining becomes 5 µm or less.

Such a manufacturing method is implemented by the following: the mechanical strength between the members is ensured by the crimping; as a result, the junction energy given by metal joining can be made weaker than ever. As a result, it is possible to manufacture a terminal with the roughness of the surface of the first member to be connected with an external connection component suppressed to the foregoing value.

### {cancelled}

For example, mention may be made of the case where the first member is formed of aluminum or an alloy mainly containing aluminum, and the second member is formed of copper or an alloy mainly containing copper.

### BRIEF DESCRIPTION OF THE DRAWINGS

FIG. 1 is a perspective view schematically showing the outline of a secondary battery using a terminal in accordance with one embodiment;
FIG. 2 is a perspective view schematically showing an assembled battery including single cells each using the terminal in accordance with one embodiment;
FIG. 3 is a cross sectional view of a broad surface schematically showing the internal structure of the secondary battery using the terminal in accordance with one embodiment;
FIG. 4 is a side view of a narrow surface schematically showing the internal structure of the secondary battery using the terminal in accordance with one embodiment;
FIG. 5 is an essential part cross sectional view schematically showing the structure of the terminal in accordance with one embodiment;
FIG. 6 is a cross sectional view schematically showing the structure of the crimped part of the terminal in accordance with one embodiment;
FIG. 7 is a cross sectional view schematically showing the structure of the crimped part of the terminal in accordance with one embodiment;
FIG. 8 is a cross sectional view schematically showing a concave part formed in the terminal in accordance with one embodiment;
FIG. 9 is a cross sectional view schematically showing a concave part formed in the terminal in accordance with one embodiment;
FIG. 10 is a scanning electron microscope (SEM) image of the cross section of the terminal after rupture in accordance with one embodiment; and
FIG. 11 is a flowchart showing the manufacturing procedure of a secondary battery including the terminal in accordance with one embodiment.

### DETAILED DESCRIPTION

Below, appropriately referring to the accompanying drawings, a terminal herein disclosed, a secondary battery including the terminal, an assembled battery including a single cell having the terminal as a constituent element, and the method for manufacturing the terminal will be described in details by taking a rectangular lithium ion secondary battery including a wound electrode body as an example. The following embodiments naturally should not be construed as particularly limiting the technology herein disclosed.

The secondary battery herein disclosed is not limited to the lithium ion secondary battery described below. For example, a sodium ion secondary battery, a magnesium ion secondary battery, or a lithium ion capacitor included in a so-called physical battery is also the example included in the secondary battery herein referred to. Further, herein, a description will be given using a lithium ion secondary battery including a wound electrode body having a structure in which a plurality of electrode bodies of positive electrodes and negative electrodes are wound via separators. Not limited to such a configuration, the electrode body may be configured such that a plurality of electrode bodies of positive electrodes and negative electrodes are stacked via separators.

Incidentally, matters necessary for executing the present disclosure, except for matters specifically referred to in the present specification can be grasped as design matters of those skilled in the art based on the related art in the present field. The present disclosure can be executed based on the contents disclosed in the present specification, and the technical common sense in the present field.

In the following drawings, the members/parts producing the same effect are given the same reference sign and numeral, and the overlapping description thereon may be omitted or simplified. The dimensional relation of length, width, or the like in each following drawing does not necessarily reflect the actual dimensional relation.

When the numerical value range is described as A to B (where A or B is a given numerical value) in the present specification, it is assumed that the range means A or more and B or less. Further, the term "main body" in the present specification represents the component accounting for 70% by weight or more based on the total amount of all the components.

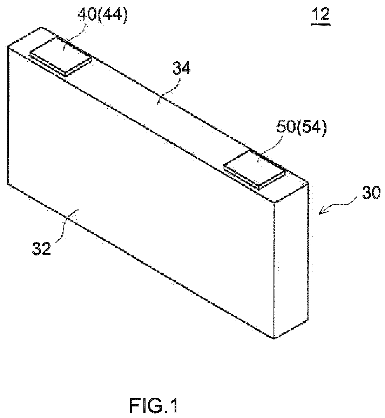

FIG. 1 is a perspective view schematically showing the outline of a lithium ion secondary battery using a terminal in accordance with one embodiment.

A lithium ion secondary battery 12 in accordance with the present embodiment includes an electrode body having a structure in which a positive electrode and a negative electrode are stacked via separators in the inside of a battery case 30. Such an electrode body is accommodated together with a nonaqueous electrolyte (not shown) in a battery case main body 32. The edge part of a lid body 34 is sealed while the inside being reduced in pressure by welding or the like, resulting in a hermetically sealed state. For the battery case 30, a metal material which is lightweight, and has good thermal conductivity such as aluminum is used. The shape of the battery case 30 is not limited to the rectangular shape as described in FIG. 1, and may be, for example, a cylindrical shape.

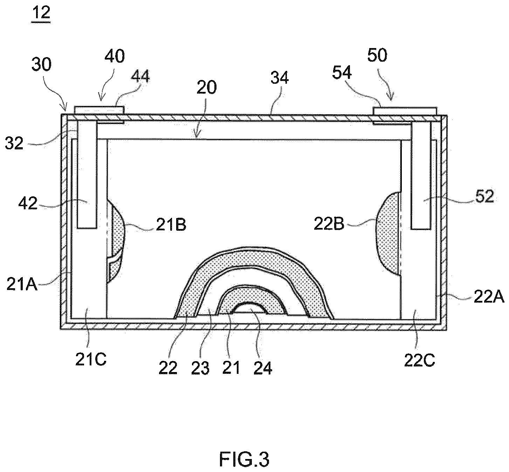

As shown in FIGS. 1 and 3, the lithium ion secondary battery 12 in accordance with the present embodiment includes a positive electrode terminal 40 and a negative electrode terminal 50 electrically connected with the electrode body 20 (FIG. 3) inside the battery case 30, and connected with an external connection component via a bus bar or the like. As shown in FIG. 3, the positive and negative electrode terminals 40 and 50 are provided in such a manner as to penetrate through a lid body 34 of the battery case 30. In the present embodiment, the negative electrode terminal 50 has a terminal structure including the first member and the second member herein disclosed. This will be described later.

Incidentally, each shape of the positive electrode terminal 40 and the negative electrode terminal 50 exposed to the outside of the battery case 30 has no particular restriction, and may be, for example, a rectangular shape as shown, or may be a circular shape including an elliptic shape.

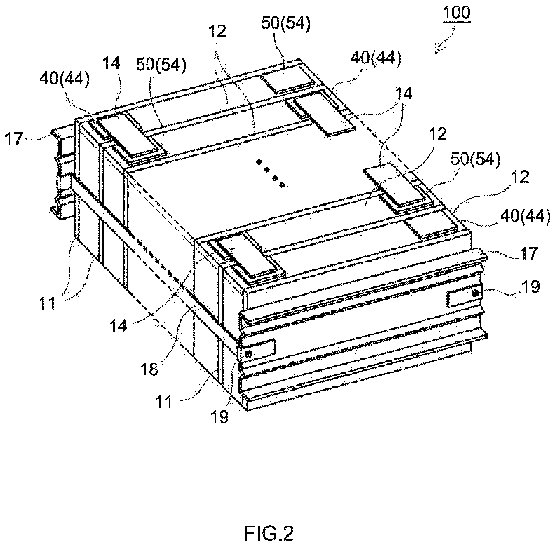

FIG. 2 is a perspective view schematically showing an assembled battery including single cells using the terminals in accordance with one embodiment.

In an assembled battery 100 including a plurality of single cells 12 arrayed therein shown in FIG. 1, the single cells 12 are arrayed via spacers 11. At further outside of the spacer 11 arranged on the outermost side, a pair of end plates 17 are arranged. These are bound by fastening beam materials 18 mounted for cross-linking the end plates 17, and the end of the fastening beam material 18 is fastened and fixed by a vis screw 19.

The positive electrode terminal 40 and the negative electrode terminal 50 are electrically connected with respective adjacent single cells 12 via bus bars 14. As the bus bar 14, a metal having high electric conductivity and high mechanical strength is generally used. For example, aluminum, copper, or the like is used.

The internal structure of a secondary battery using the terminal herein disclosed will be described with reference to FIG. 3. FIG. 3 is a cross sectional view of the broad surface schematically showing the structure of a secondary battery using the terminal in accordance with one embodiment.

The electrode body 20 herein disclosed is a power generating element accommodated in the inside of the battery case 30 while being covered with an insulating film or the like not shown, and is a so-called wound electrode body including a long sheet-shaped positive electrode 21 and a long sheet-shaped negative electrode 22 wound in a manner stacked one on another with two similarly long sheet-shaped separators 23 and 24 interposed therebetween.

The positive electrode 21 includes a foil-shaped positive electrode collector 21A, and a positive electrode active material layer 21B formed along the longitudinal direction on each opposite surface of the positive electrode collector 21A. Further, at one side edge part of the electrode body 20 in the width direction of the secondary battery 12, a positive electrode collector exposed part 21C at which the positive electrode active material layer 21B is not formed, and the positive electrode collector 21A is exposed is disposed. The positive electrode active material layer 21B includes various materials such as a positive electrode active material, a binder, and a conductive material. Incidentally, as for the materials included in the positive electrode active material layer 21B, those usable in a conventional common lithium ion secondary battery can be used without particular restriction, and do not characterize the present disclosure, and hence will not be described in detail.

As the positive electrode collector terminal 42, for example, aluminum foil is used.

The negative electrode 22 includes a foil-shaped negative electrode collector 22A, and a negative electrode active material layer 22B formed along the longitudinal direction on one surface or each opposite surface of the negative electrode collector 22A. Further, at the other side edge part of the electrode body 20 in the width direction, a negative electrode collector exposed part 22C at which the negative electrode active material layer 22B is not formed, and the negative electrode collector 22A is exposed is disposed. As with the positive electrode active material layer 21B, the negative electrode active material layer 22B includes various materials such as a negative electrode active material and a binder. As for the materials included in the negative electrode active material layer 22B, those usable in a conventional common lithium ion secondary battery can be used without particular restriction, and do not characterize the present disclosure, and hence will not be described in detail.

As the negative electrode collector terminal 52, for example, copper foil is used.

The separators 23 and 24 are each interposed between the positive electrode 21 and the negative electrode 22, and prevent the direct contact between the electrodes. Although not shown, a plurality of fine holes are formed at the separators 23 and 24. The fine holes are configured such that electric charge carriers (lithium ions for a lithium ion secondary battery) transfer between the positive electrode 21 and the negative electrode 22.

For the separators 23 and 24, a resin sheet having a desirable heat resistance (e.g., a sheet made of polyolefin such as polypropylene or polystyrene), or the like is used.

As the nonaqueous electrolyte to be accommodated in the battery case 30, typically, those including a nonaqueous solvent and a support salt, and usable for a conventional common lithium ion secondary battery can be used without particular restriction, and do not characterize the present disclosure, and hence will not be described in details.

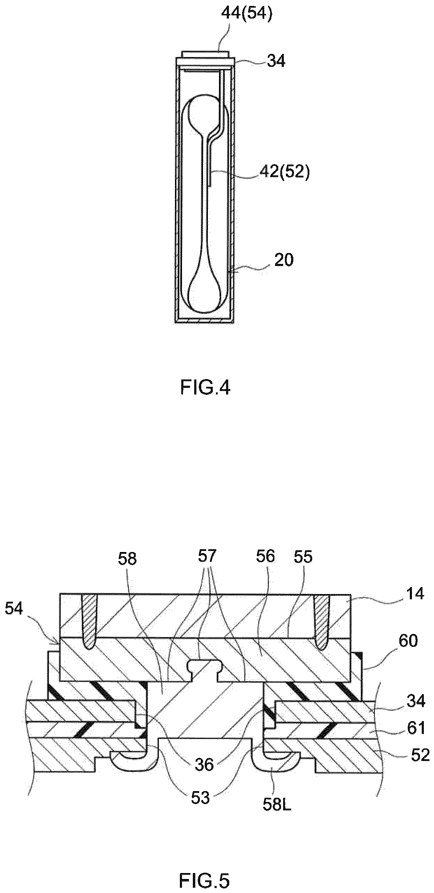

As shown in FIGS. 3 and 4, the positive electrode terminal 40 includes a positive electrode collector terminal 42 connected to the electrode body 20 inside the battery case 30, and a positive electrode connection terminal 44 connected with the collector terminal 42, and partially exposed through a through hole 36 of the lid body 34 to the outer surface of the lid body 34. The positive electrode collector terminal 42 is arranged in the inside of the battery case 30, and is connected with the positive electrode 21 via the positive electrode collector exposed part 21C.

As shown in FIGS. 3 and 4, the negative electrode terminal 50 includes a negative electrode collector terminal 52 connected to the electrode body 20 inside the battery case 30, and a negative electrode connection terminal 54 connected with the collector terminal 52, and partially exposed through the through hole 36 of the lid body 34 to the outer surface of the lid body 34. The negative electrode collector terminal 52 is arranged in the inside of the battery case 30, and is connected with the negative electrode 22 via the negative electrode collector exposed part 22C.

Below, based on the configuration of the negative electrode terminal 50 embodying the terminal structure herein disclosed, a detailed description will be given with reference to FIG. 5. Incidentally, the configuration in the case where the positive electrode terminal 40 has the terminal structure herein disclosed is the same as the configuration in the case where the negative electrode terminal 50 has the negative electrode connection terminal 54, and hence, a detailed description thereon is omitted.

FIG. 5 is a cross sectional view schematically showing the essential structure of the terminal in accordance with one embodiment.

As described above, the negative electrode terminal 50 includes the negative electrode connection terminal 54 and the negative electrode collector terminal 52. The negative electrode connection terminal 54 includes a first member 56 and a second member 58.

The negative electrode collector terminal 52 is connected with the part present inside the battery case 30 in the second member 58 of the negative electrode connection terminal 54 by crimping, welding, or the like. In the present embodiment, as described later, the negative electrode collector terminal 52 and the negative electrode connection terminal 54 are connected with each other by the crimped structure formed between the negative electrode collector terminal 52 and a leg part 58L of the second member 58 of the negative electrode connection terminal 54, thereby forming the negative electrode terminal 50 in accordance with the present embodiment (see FIG. 5).

For the negative electrode collector terminal 52 to be connected with the negative electrode collector 22A, preferably, the same kind of metal as that of the negative electrode collector 22A is used, and for example, copper is used. For the second member 58 of the negative electrode connection terminal 54 to be connected with the negative electrode collector terminal 52, preferably, the same kind of metal as that of the negative electrode collector terminal 52 is used, and for example, copper is used. On the other hand, in the present embodiment, the first member 56 of the negative electrode connection terminal 54 is made of aluminum.

As shown in FIG. 5, the negative electrode connection terminal 54 is inserted through the through hole 36 formed in the lid body 34, and the lid body 34 and the negative electrode connection terminal 54 are insulated therebetween by a gasket 60.

The gasket 60 is formed of a material having insulation property. For example, a fluorine resin such as perfluoroalkoxy alkane (PFA) is used.

Further, as shown, the negative electrode collector terminal 52 is insulated by an insulator 61. The insulator 61 is formed of a material having an insulation property. For example, a resin material such as polyphenylene sulfide resin (PPS) is used.

The negative electrode connection terminal 54 reflects the terminal structure herein disclosed, and includes the first member 56 and the second member 58 each made of a metal. The first member 56 is formed in a sheet shape, and the second member 58 has a crimped part 58C opposed to the first member 56. Herein, at one surface of the first member 56, the crimped part 58C of the second member 58 is crimped with the first member 56 not via any through hole, and the first member 56 and the second member 58 have metal junction surfaces mutually metal joined to opposing surfaces 57. A surface 55 of the first member 56 opposite to the opposing surface thereof is connected with the outside by, for example, being at least partially welded with the bus bar 14.

The shapes of the first member 56 and the second member 58 have no particular restriction unless the effects of the present disclosure are impaired. Although not limited thereto, the first member 56 is in a sheet shape, and has a concave part 56R in which the crimped part 58C of the second member 58 is fitted. Although not limited thereto, the second member 58 has, for example, the crimped part 58C to be crimped with the first member 56, and a shaft part 58S to be inserted though the through hole 36 of the lid body 34. The second member 58 may have the leg part 58L to be connected with the negative electrode collector terminal 52 by welding or the like, and, to be fixed to the lid body 34 by crimping or the like. Namely, as shown in FIG. 5, the negative electrode connection terminal 54 in accordance with the present embodiment is fixed by crimping the leg part 58L of the second member 58 which has passed through the through hole 36 of the lid body 34 inside the battery case 30 to the periphery of the crimping through hole 53 provided in the opposing negative electrode collector terminal 52.

The shapes of the crimped part 58C of the second member 58 and the concave part 56R of the first member 56, and the like have no particular restriction so long as the first member 56 and the second member 58 are crimped and joined with each other with a sufficient strength.

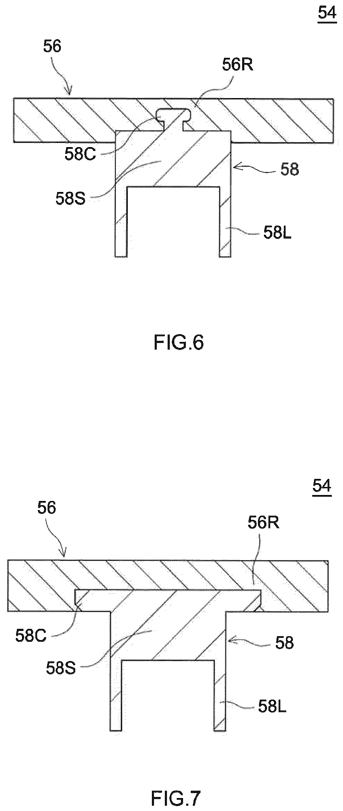

As shown in FIG. 6, the crimped part 58C of the second member 58 may be provided in a convex shape at the surface of the shaft part 58S opposed to the first member 56. As shown in FIG. 7, the crimped part 58C of the second member 58 may be provided in a flange shape at the surface of the shaft part 58S opposed to the first member 56.

Joining between the first member 56 and the second member 58 is performed by ultrasonic joining. However, the method for joining the first member 56 and the second member 58 by metal joining is not limited to ultrasonic joining, and may also be performed by, for example, diffusion joining, frictional pressure contact or laser welding.

For the negative electrode connection terminal 54 herein disclosed, as described above, the crimped part 58C of the second member 58 is crimped with the first member 56, and hence the junction strength between both the members is favorable, and joining is performed by metal joining, thereby ensuring a favorable conduction.

The junction strength between the members is ensured by the crimping. For this reason, metal joining between the first member 56 and the second member 58 may be performed within a small region on the opposing surfaces of the first member 56 and the second member 58.

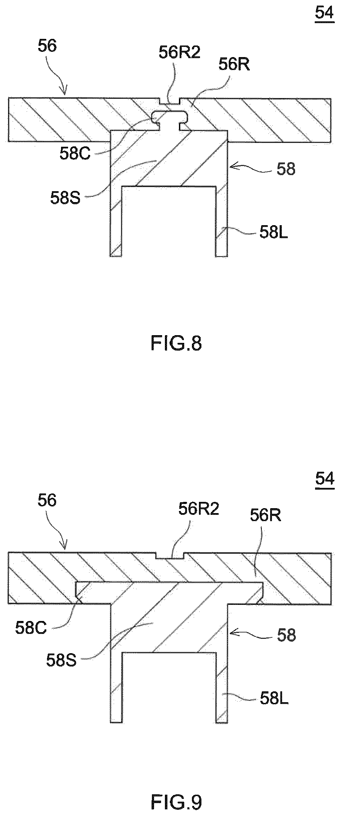

Although not limited thereto, the area of the surface at which the first member 56 and the second member 58 are metal joined is preferably 50% or less, and more preferably, for example, 30% or less of the area of each opposing surface of the first member 56 and the second member 58. Such an area may be a still narrower area, and may be, for example, 10% or less, and 5% or less so long as the effects of the present disclosure are produced. Further, as shown in FIGS. 8 and 9, the first member 56 may have a concave part 56R2 at a surface 55 opposed to the surface 57 opposed to the second member 58, and the metal junction surface may be formed inside the region corresponding to the opening of the concave part 56R2. Herein, the wording "the area of each opposing surface of the first member 56 and the second member 58" represents the area of the surface formed when each opposing surface 57 of the first member 56 and the second member 58 is projected onto the surface horizontal with the surface 55.

Even when metal joining is attained only in such a narrow region, previous crimping between the first member 56 and the second member 58 results in a favorable junction strength between the members. Further, the effect exerted by the metal joining on the first member surface is small. As a result, the flatness of the surface of the first member to be connected with an external connection component is kept, which eliminates the necessity of a post treatment for flattening.

Further, metal joining between the first member 56 and the second member 58 can be performed with a weak joining energy so as to suppress the surface roughness of the surface of the first member 56 opposite to the surface thereof opposed to the second member 58. For example, the arithmetic average roughness Sa of the surface after metal joining is preferably 5 µm or less, more preferably 3 µm or less, and further preferably, for example, 2 µm or less.

Thus, the surface opposite to the opposing surfaces of the first member 56 and the second member 58 is flat. As a result, without performing a post treatment such as flattening, the negative electrode connection terminal 54 is favorably connected with an external connection component such as a bus bar.

In the present embodiment, the bus bar 14 to be connected with the negative electrode connection terminal 54 is formed of aluminum or an alloy mainly containing aluminum. Therefore, in the present embodiment, the first member 56 made of aluminum and the metal species forming the bus bar are matched with each other. This can improve the conduction and the junction strength between the negative electrode terminal and the bus bar.

As described above, in the present embodiment, the first member 56 and the second member 58 have metal junction surfaces formed by ultrasonic joining.

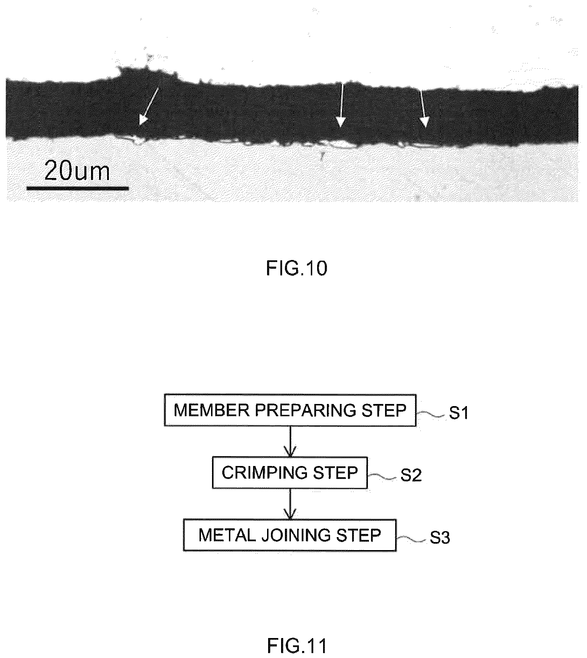

The first member 56 and the second member 58 having such junction surfaces can be confirmed by causing rupture at the interface between the first member 56 and the second member 58, and observing the ruptured surface. FIG. 10 is a SEM image of the surface resulting from rupture of the first member 56 formed of aluminum and the second member 58 formed of copper. The arrow in the drawing indicates the adhesion of the first member 56 formed of aluminum on the second member 58 formed of copper. When at least one ruptured surface of the first member 56 and the second member 58, adhesion of the other metal can be thus observed, it can be confirmed that there has been the joined surface.

The secondary battery 12 having the terminal herein disclosed (in the present embodiment, a negative electrode terminal) can be brought into favorable conduction with an external connection component such as the bus bar 14. Further, with an assembled battery 100 using the secondary battery 12 as a single cell, the bus bar 14 is formed of the same metal as the metal species forming the first member 56 of the terminal herein disclosed (particularly, a connection terminal). This can establish a better conduction between single cells 12.

Below, a method for manufacturing the terminal herein disclosed, and a method for manufacturing a secondary battery having the terminal will be described again.

Incidentally, below, the manufacturing method will be described by taking a method for manufacturing a negative electrode terminal having the terminal herein disclosed as an example. For the method for manufacturing a positive electrode terminal having the terminal herein disclosed, manufacturing can be performed by the same method as that for the case of a negative electrode terminal having the terminal, and hence a description thereon is omitted.

FIG. 8 is a flowchart of a method for manufacturing a terminal.

First, the first member 56 and the second member 58 forming the terminal are prepared (S1).

Then, the first member 56 and the second member 58 are crimped via the crimped part 58C and the concave part 56R (S2). Crimping can be performed by, for example, fixing any one of the first member 56 and the second member 58, and pressurizing the other against one. This operation deforms and press-fits one member of the first member 56 and the second member 58 with respect to the other member. As a result, the crimped part 58C and the concave part 56R can be fixed.

Then, the opposing surfaces of the first member 56 and the second member 58 are at least partially metal joined to each other (S3).

The metal joining between the first member 56 and the second member 58 is performed by ultrasonic joining as described above. Ultrasonic joining is preferably performed by, for example, sandwiching the first member 56 and the second member 58 by a horn and an anvil, and applying an ultrasonic wave vibration thereto while pressing the first member 56 and the shaft part 58S of the second member 58.

For example, the conditions for the ultrasonic wave vibration to be applied via the horn can be appropriately set according to the metal species and the dimensions of the first member 56 and the second member 58, the shape of the horn, and the like. Although not limited thereto, for example, the amplitude can be set at about 20 to 80 µm; the frequency, at about 15 to 150 kHz; and the energy amount to be given to the first member 56 and the second member 58, at about 30 to 500 J.

Incidentally, not limited to the present embodiment, the method for joining the first member 56 and the second member 58 by metal joining may be performed by, for example, diffusion joining, frictional pressure contact, or laser welding.

Herein, although the step of metal joining the first member 56 and the second member 58 (S3) is carried out so that the metal junction surface may have an area of 50% or less of the area of each normal opposing surface of the first member 56 and the second member 58 as described above, there is no particular restriction thereon. Such an area may be, for example, the region having an area exceeding 10% of the area of the each opposing surface (e.g., 10% to 20% of the total area). The step may be carried out so that such an area may become a still narrower area, and may be carried out so that such an area may become 10% or less or 5% or less.

The first member 56 and the second member 58 have been previously crimped. As a result, the junction strength between the members is ensured. For this reason, even when the region for metal joining is narrowed, the junction strength and the conduction between the members can be both attained. By narrowing the region for metal joining, it is also possible to suppress the region to be roughened of the surface to be connected with an external connection component. The terminal manufactured with this method eliminates the necessity of a post treatment such as flattening of the surface to be connected with an external connection component, and is also preferable from the viewpoint of the productivity.

Incidentally, although the step of metal joining the first member 56 and the second member 58 (S3) is preferably carried out so that the arithmetic average roughness Sa of the surface opposite to the opposing surface of the first member 56 after the metal joining may become 5 µm or less as described above, there is no particular restriction thereon. The step (S3) may be carried out so that the arithmetic average roughness Sa may become 3 µm or less, and for example, 2 µm or less. By reducing the junction energy to be applied for joining the first member 56 and the second member 58 by ultrasonic joining, it is possible to reduce the Sa. The terminal manufactured with this method eliminates the necessity of a post treatment such as flattening of the surface to be connected with an external connection component, and is also preferable from the viewpoint of the productivity.

## Claims

1. A terminal (54) forming any of a positive electrode and a negative electrode of a secondary battery (12), the terminal (54) comprising:
a first member (56) and a second member (58) each made of a metal,
the first member (56) and the second member (58) being formed of mutually different metals,
the first member (56) being formed in a sheet shape and having a concave part (56R), and
the second member (58) having a crimped part (58C) and a shaft part (58S),
wherein:
the crimped part (58C) of the second member (58) is provided in a convex shape or a flange shape at a surface of the shaft part (58S) opposed to the first member (56), fitted into the concave part (56R) of the first member (56) and crimped with the first member (56) at one surface of the first member (56) not via a through hole, and
the first member (56) and the second member (58) have metal junction surfaces metal-joined to each other at opposing surfaces thereof after the first member (56) and the second member (58) have been previously crimped, wherein the metal joining is performed by ultrasonic joining, diffusion joining, frictional pressure contact, or laser welding.

2. The terminal (54) according to claim 1,
wherein an area of the metal junction surface is 10% or less of an area of each opposing surface of the first member (56) and the second member (58).

3. The terminal (54) according to claim 2,
wherein the first member (56) has a concave part (56R2) at a surface thereof on an opposite side to a surface opposed to the second member (58), and
the metal junction surface is formed at a part opposed to the concave part (56R2).

4. The terminal (54) according to claim 1,
wherein an arithmetic average roughness Sa at a surface of the first member (56) on an opposite side to the opposing surface is 5 µm or less.

5. The terminal (54) according to claim 1,
wherein the first member (56) is formed of aluminum or an alloy mainly containing aluminum, and the second member (58) is formed of copper or an alloy mainly containing copper.

6. The terminal (54) according to any one of claims 1 to 5,
wherein the metal junction surfaces present between the first member (56) and the second member (58) have junction surfaces caused by ultrasonic joining.

7. A secondary battery (12), comprising:
an electrode body (20) including a positive electrode and a negative electrode;
a battery case (30) accommodating therein the electrode body (20); and
a positive electrode terminal (40) and a negative electrode terminal (50) electrically connected with the positive electrode and the negative electrode in the electrode body (20), respectively,
wherein at least one of the positive electrode terminal (40) and the negative electrode terminal (50) includes the terminal (54) according to any one of claims 1 to 6.

8. An assembled battery (100) comprising a plurality of single cells electrically connected to one another and arrayed therein,
wherein the secondary battery (12) according to claim 7 is used as each of the plurality of single cells.

9. The assembled battery (100) according to claim 8, wherein
for the respective plurality of single cells, a positive electrode terminal (40) of one single cell and a negative electrode terminal (50) of another single cell are electrically connected with each other by a prescribed bus bar (14), and
the bus bar (14) is formed of the same metal as a metal forming the first member (56) of the terminal (54).

10. A method for manufacturing a terminal (54) forming any of a positive electrode and a negative electrode of a secondary battery (12), the method comprising the steps of:
preparing (S1) a first member (56) and a second member (58) each made of a metal and forming the terminal (54), with the first member (56) and the second member (58) being formed of mutually different metals, the first member (56) being formed in a sheet shape and having a concave part (56R), and the second member (58) having a crimped part (58C) and a shaft part (58S), wherein the crimped part (58C) of the second member (58) is provided in a convex shape or a flange shape at a surface of the shaft part (58S) opposed to the first member (56);
crimping (S2) the crimped part (58C) of the second member (58), after fitting the crimped part (58C) into the concave part (56R) of the first member (56), to the first member (56) not via a through hole at one surface of the first member (56); and
metal-joining (S3), after crimping the crimped part (58C) of the second member (58) to the first member (56), at least a part of opposing surfaces of the first member (56) and the second member (58) to each other by ultrasonic joining, diffusion joining, frictional pressure contact, or laser welding.

11. The method for manufacturing a terminal (54) according to claim 10,
wherein the step of metal-joining is carried out so that a junction surface of metal-joining formed by the step has an area of 10% or less of an area of each opposing surface of the first member (56) and the second member (58).

12. The method for manufacturing a terminal (54) according to claim 10,
wherein the step of metal-joining is carried out so that an arithmetic average roughness Sa at a surface of the first member (56) on an opposite side to the opposing surface after the metal joining becomes 5 µm or less.

13. The method for manufacturing a terminal (54) according to claim 10,
wherein the first member (56) is formed of aluminum or an alloy mainly containing aluminum, and the second member (58) is formed of copper or an alloy mainly containing copper.

## Patentansprüche

1. Anschluss (54), welcher eine beliebige von einer positiven Elektrode und einer negativen Elektrode einer Sekundärbatterie (12) ausbildet, wobei der Anschluss (54) aufweist:
ein erstes Element (56) und ein zweites Element (58), welche jeweils aus Metall bestehen,
wobei das erste Element (56) und das zweite Element (58) aus zueinander unterschiedlichen Metallen ausgebildet sind,
wobei das erste Element (56) in einer Blechform ausgebildet ist und einen konkaven Teil (56R) aufweist, und
das zweite Element (58) einen gekrimpten Teil (58C) und einen Schaftteil (58S) aufweist, wobei:
der gekrimpte Teil (58C) des zweiten Elements (58) in einer konvexen Form oder Flanschform an einer Oberfläche des Schaftteils (58S) gegenüberliegend zu dem ersten Element (56) bereitgestellt ist, in den konkaven Teil (56R) des ersten Elements (56) eingepasst ist und mit dem ersten Element (56) an einer Oberfläche des ersten Elements (56) nicht über ein Durchgangsloch gecrimpt ist, und
das erste Element (56) und das zweite Element (58) Metallverbindungsflächen aufweisen, welche an zueinander gegenüberliegenden Oberflächen derselben durch Metallfügen aneinandergefügt sind, nachdem das erste Element (56) und das zweite Element (58) zuvor gekrimpt worden sind, wobei das Metallfügen durch Ultraschallfügen, Diffusionsfügen, Kontaktieren durch Reibungsdruck oder Laserschweißen durchgeführt wird.

2. Anschluss (54) nach Anspruch 1,
wobei ein Bereich der Metallverbindungsfläche 10 % oder weniger einer Fläche einer jeden der gegenüberliegenden Oberflächen des ersten Elements (56) und des zweiten Elements (58) ist.

3. Anschluss (54) nach Anspruch 2,
wobei das erste Element (56) einen konkaven Teil (56R2) an einer Oberfläche desselben auf einer Seite entgegengesetzt zu einer dem zweiten Element (58) gegenüberliegenden Oberfläche aufweist, und
die Metalverbindungsfläche an einem dem konkaven Teil (56R2) gegenüberliegenden Teil ausgebildet ist.

4. Anschluss (54) nach Anspruch 1,
wobei eine arithmetische mittlere Rauheit Sa an einer Oberfläche des ersten Elements (56) auf einer Seite entgegengesetzt zu der gegenüberliegenden Oberfläche 5 µm oder weniger ist.

5. Anschluss (54) nach Anspruch 1,
wobei das erste Element (56) aus Aluminium oder einer hauptsächlich aluminiumhaltigen Legierung ausgebildet ist, und das zweite Element (58) aus Kupfer oder einer hauptsächlich kupferhaltigen Legierung ausgebildet ist.

6. Anschluss (54) nach einem der Ansprüche 1 bis 5,
wobei die Metallverbindungsflächen, welche zwischen dem ersten Element (56) und dem zweiten Element (58) vorhanden sind, Verbindungsflächen aufweisen, welche durch Ultraschallfügen verursacht wurden.

7. Sekundärbatterie (12), aufweisend:
einen Elektrodenkörper (20), welcher eine positive Elektrode und eine negative Elektrode beinhaltet;
ein Batteriegehäuse (30), in welchem der Elektrodenkörper (20) untergebracht ist; und
einen positiven Elektrodenanschluss (40) und einen negativen Elektrodenanschluss (50), welche jeweils mit der positiven Elektrode und der negativen Elektrode in dem Elektrodenkörper (20) elektrisch verbunden sind,
wobei zumindest einer von dem positiven Elektrodenanschluss (40) und dem negativen Elektrodenanschluss (50) den Anschluss (54) nach einem der Ansprüche 1 bis 6 beinhaltet.

8. Zusammengebaute Batterie (100), aufweisend eine Mehrzahl von Einzelzellen, welche miteinander elektrisch verbunden und in derselben angeordnet sind,
wobei die Sekundärbatterie (12) nach Anspruch 7 als eine jeweilige von der Mehrzahl von Einzelzellen verwendet wird.

9. Zusammengebaute Batterie (100) nach Anspruch 8, wobei
für die jeweilige Mehrzahl von Einzelzellen ein positiver Elektrodenanschluss (40) von einer Einzelzelle und ein negativer Elektrodenanschluss (50) von einer anderen Einzelzelle durch eine vorgeschriebene Sammelschiene (14) elektrisch miteinander verbunden sind, und
die Sammelschiene (14) aus dem gleichen Material wie ein Metall gebildet ist, welches das erste Element (56) des Anschlusses (54) ausbildet.

10. Verfahren zum Herstellen eines Anschlusses (54), der eine beliebige von einer positiven Elektrode und einer negativen Elektrode von einer Sekundärbatterie (12) ausbildet, wobei das Verfahren folgende Schritte aufweist:
Herstellen (S1) eines ersten Elements (56) und eines zweiten Elements (58), welche jeweils aus einem Metall bestehen und den Anschluss (54) ausbilden, wobei das erste Element (56) und das zweite Element (58) aus zueinander unterschiedlichen Metallen bestehen, wobei das erste Element (56) in Blechform ausgebildet ist und einen konkaven Teil (56R) aufweist, und das zweite Element (58) einen gekrimpten Teil (58C) und einen Schaftteil (58S) aufweist, wobei der gekrimpte Teil (58C) des zweiten Elements (58) in einer konvexen Form oder Flanschform an einer dem ersten Element (56) gegenüberliegenden Oberfläche des Schaftteils (58S) bereitgestellt ist;
Krimpen (S2) des gekrimpten Teils (58C) des zweiten Elements (58), nachdem der gekrimpte Teil (58C) in den konkaven Teil (56R) des ersten Elements eingepasst worden ist, an das erste Element (56) nicht über ein Durchgangsloch an einer Oberfläche des ersten Elements (56); und
Metallfügen (S3), nachdem der gekrimpte Teil (58c) des zweiten Elements (58) an das erste Element (56) gekrimpt worden ist, von zumindest einem Teil von zueinander gegenüberliegenden Oberflächen des ersten Elements (56) und des zweiten Elements (58) aneinander durch Ultraschallfügen, Diffusionsfügen, Kontaktieren durch Reibungsdruck oder Laserschweißen.

11. Verfahren zur Herstellung eines Anschlusses (54) nach Anspruch 10,
wobei der Schritt des Metallfügens so ausgeführt wird, dass eine Verbindungsfläche des Metallfügens, welche durch den Schritt ausgebildet worden ist, eine Fläche von 10 % oder weniger von einer Fläche von einer jeden gegenüberliegenden Oberfläche des ersten Elements (56) und des zweiten Elements (58) aufweist.

12. Verfahren zur Herstellung eines Anschlusses (54) nach Anspruch 10,
wobei der Schritt des Metallfügens so ausgeführt wird, dass eine arithmetische mittlere Rauheit Sa an einer Oberfläche des ersten Elements (56) auf einer entgegengesetzten Seite der gegenüberliegenden Oberfläche nach dem Metallfügen 5 µm oder weniger wird.

13. Verfahren zur Herstellung eines Anschlusses (54) nach Anspruch 10,
wobei das erste Element (56) aus Aluminium oder einer hauptsächlich aluminiumhaltigen Legierung gebildet ist, und das zweite Element (58) aus Kupfer oder einer hauptsächlich kupferhaltigen Legierung gebildet ist.

## Revendications

1. Borne (54) formant l'une quelconque d'une électrode positive et d'une électrode négative d'une batterie secondaire (12), la borne (54) comprenant:
un premier élément (56) et un deuxième élément (58) chacun en métal,
le premier élément (56) et le deuxième élément (58) étant formés de métaux différents l'un de l'autre,
le premier élément (56) étant formé en forme de feuille et ayant une partie concave (56R), et
le deuxième élément (58) ayant une partie sertie (58C) et une partie tige (58S),
dans lequel:
la partie sertie (58C) du deuxième élément (58) est disposée en forme convexe ou en forme de collerette sur une surface de la partie tige (58S) opposée au premier élément (56), emboîtée dans la partie concave (56R) du premier élément (56) et sertie avec le premier élément (56) sur une surface du premier élément (56) sans traverser un trou traversant, et
le premier élément (56) et le deuxième élément (58) ont des surfaces de jonction métallique jointes métalliquement l'une à l'autre sur leurs surfaces opposées après que le premier élément (56) et le deuxième élément (58) aient été préalablement sertis, la jonction métallique étant réalisée par soudage par ultrasons, soudage par diffusion, contact sous pression frictionnelle ou soudage par laser.

2. Borne (54) selon la revendication 1,
dans laquelle une surface de la surface de jonction métallique est 10 % ou moins d'une surface de chacune des surfaces opposées du premier élément (56) et du deuxième élément (58).

3. Borne (54) selon la revendication 2,
dans laquelle le premier élément (56) a une partie concave (56R2) sur une surface de celui-ci du côté opposé à la surface opposée au deuxième élément (58), et
la surface de jonction métallique est formée sur une partie opposée à la partie concave (56R2).

4. Borne (54) selon la revendication 1,
dans laquelle une rugosité moyenne arithmétique Sa sur une surface du premier élément (56) du côté opposé à la surface opposée est de 5 µm ou moins.

5. Borne (54) selon la revendication 1,
dans laquelle le premier élément (56) est formé d'aluminium ou d'un alliage à base d'aluminium, et le deuxième élément (58) est formé de cuivre ou d'un alliage à base de cuivre.

6. Borne (54) selon l'une quelconque des revendications 1 à 5,
dans laquelle les surfaces de jonction métallique présentes entre le premier élément (56) et le deuxième élément (58) ont des surfaces de jonction résultant du soudage par ultrasons.

7. Batterie secondaire (12), comprenant:
un corps d'électrode (20) comprenant une électrode positive et une électrode négative;
un boîtier de batterie (30) renfermant le corps d'électrode (20); et
une borne d'électrode positive (40) et une borne d'électrode négative (50) connectées électriquement respectivement à l'électrode positive et à l'électrode négative dans le corps d'électrode (20),
dans laquelle au moins l'une de la borne d'électrode positive (40) et de la borne d'électrode négative (50) comprend la borne (54) selon l'une quelconque des revendications 1 à 6.

8. Batterie assemblée (100), comprenant une pluralité de cellules unitaires connectées électriquement l'une à l'autre et disposées dedans,
dans laquelle chacune desdites pluralité de cellules unitaires est une batterie secondaire (12) selon la revendication 7.

9. Batterie assemblée (100) selon la revendication 8, dans laquelle,
pour lesdites pluralité de cellules unitaires, une borne d'électrode positive (40) d'une cellule unitaire et une borne d'électrode négative (50) d'une autre cellule unitaire sont connectées électriquement par une barre omnibus (14) prédéterminée, et
la barre omnibus (14) est formée du même métal que le métal formant le premier élément (56) de la borne (54).

10. Procédé pour fabriquer une borne (54) formant l'une quelconque d'une électrode positive et d'une électrode négative d'une batterie secondaire (12), le procédé comprenant les étapes suivantes:
préparation (S1) d'un premier élément (56) et d'un deuxième élément (58) chacun en métal et formant la borne (54), le premier élément (56) et le deuxième élément (58) étant formés de métaux différents l'un de l'autre, le premier élément (56) étant formé en forme de feuille et ayant une partie concave (56R), et le deuxième élément (58) ayant une partie sertie (58C) et une partie tige (58S), dans laquelle la partie sertie (58C) du deuxième élément (58) est prévue en forme convexe ou en forme de collerette sur une surface de la partie tige (58S) opposée au premier élément (56);
sertissage (S2) de la partie sertie (58C) du deuxième élément (58), après avoir emboîté la partie sertie (58C) dans la partie concave (56R) du premier élément (56), sur le premier élément (56) sans traverser un trou traversant sur une surface du premier élément (56); et jonction métallique (S3), après le sertissage de la partie sertie (58C) du deuxième élément (58) sur le premier élément (56), d'au moins une partie des surfaces opposées du premier élément (56) et du deuxième élément (58) l'une à l'autre par soudage par ultrasons, soudage par diffusion, contact par pression frictionnelle ou soudage par laser.

11. Procédé de fabrication d'une borne (54) selon la revendication 10,
dans lequel l'étape de jonction métallique est réalisée de sorte qu'une surface de la jonction métallique formée par cette étape présente une surface de 10 % ou moins d'une surface de chacune des surfaces opposées du premier élément (56) et du deuxième élément (58).

12. Procédé de fabrication d'une borne (54) selon la revendication 10,
dans lequel l'étape de jonction métallique est réalisée de sorte qu'une rugosité moyenne arithmétique Sa sur une surface du premier élément (56) du côté opposé à la surface opposée après la jonction métallique devienne 5 µm ou moins.

13. Procédé de fabrication d'une borne (54) selon la revendication 10,
dans lequel le premier élément (56) est formé d'aluminium ou d'un alliage à base d'aluminium, et le deuxième élément (58) est formé de cuivre ou d'un alliage à base de cuivre.
